# EUROPEAN PATENT SPECIFICATION

(11) **EP 1 249 177 B1**
(45) Date of publication and mention of the grant of the patent: **22.08.2007**
(21) Application number: 02252463.1
(22) Date of filing: 05.04.2002
(51) Int. Cl.: A23L 1/08, A23L 1/307, A23L 1/05, A23L 1/236

(54) **Multifunctional food base for honey substitutes and fluid foods**
Mehrzweckmässiges Ausgangsmaterial für Ersatzhonig und flüssige Nahrungsmittel
Base alimentaire multifonctionnelle pour substituts du miel et aliments liquides

(30) Priority: 06.04.2001 US 282061 P
(43) Date of publication of application: 16.10.2002
(73) Proprietor: McNEIL-PPC, Inc., Skillman, NJ 08558 (US)
(72) Inventor: Liao, Shyhyuan, West Windsor, New Jersey 08550 (US); Merkel, Carolyn M., North Haledon, New Jersey 075808 (US)
(74) Representative: Mercer, Christopher Paul

(56) References cited:
- EP-A- 0 494 743
- EP-A- 0 575 179
- EP-A- 0 649 601
- WO-A-01/01793
- US-A- 4 786 521
- US-A- 5 447 743
- US-A- 5 478 589
- US-A- 6 162 484

## Description

### FIELD OF THE INVENTION

The invention describes a formulated multifunctional food base which offers specific viscosity, flow property, texture and mouth-feel as well as nutritional benefits. The base is useful for preparing sweetened fluid foods such as honey substitutes or liquid syrups. The "multifunctional" means the base can be used for various fluid foods with low, medium or high viscosity. The fluid foods or honey substitutes will be stable, have low calorie contents, and retain viscosity and sensory properties comparable to their natural counterparts.

### BACKGROUND OF THE INVENTION

Natural honey contains a highly concentrated solution of simple sugars with floral-based aromatic notes. It has a solids content of about 80% by weight and a water content of about 17% by weight. Most of the solids content in honey is fructose (~38.2%) and glucose. (~31%). Due to this high simple sugar content, honey exhibits unique viscosity, stickiness, flow consistency, and mouth-feel. However because of honey's high calorie content (~304 kcal/100g) a number of attempts have been made to provide reduced calorie honey substitutes.

Several US patents describe reduced calorie honey products. For example, US Patent number 5,447,743 describes a honey substitute that contains honey, water-soluble polysaccharides, polyalcohols and optionally densifiers (i.e. maltodextrins, gum arabic, carboxymethylcellulose, dietary fiber and other ingredients). Similarly US patent 6,162,484 describes a reduced calorie honey containing 65 to 50 weight percent honey and 35 to 65 weight percent extender. The extender in this patent also consists of polysaccharides and polyalcohols. However, both of these honey substitutes still contains a substantial amount of honey (10 to 50 percent by weight).

Hubbell in U.S. patent 5,750,175 describes a gelled honey product that displays comparable performance with regard to flavor release faithful to the natural honey. Hubbell describes increasing the viscosity of honey to a medium soft gelled texture. However, this product would undesirably depart from the flow properties and consistency of natural honey products and reduce consumer acceptance of the product.

EP-A-0 575 179 describes a reduced calorie fruit spread comprising the gelled product of: water; fruit or fruit flavouring; sucralose high intensity sweetener; low methoxy pectin or carrageenan; carboxymethylcellulose; guar gum; and locust bean gum. US-A-4 786 521 describes an aqueous table syrup containing 15-45% sugar solids; 0-1.0% propylene glycol alginate; 0-1-5% by weight carboxymethylcellulose; up to 50% by weight maltodextrin; and water. The syrup is claimed to have a viscosity of 200 cps at 25°C and qualities comparable to that of conventional table syrups containing much higher levels of sugar solids. US-A-5 478 589 relates to a gum system for use in a very low calorie table syrup having an aftertaste, said gum system comprising carboxymethylcellulose gum, xanthan gum, and propylene glycol alginate gum, wherein the carboxymethylcellulose gum and xanthan gum are present in a combined amount sufficient to impart to the syrup a desired stable viscosity suitable for a table syrup, and wherein the propylene glycol alginate gum is present in an amount sufficient to substantially mask the aftertaste of the very low calorie table syrup. The document also relates to an artificially sweetened, very low calorie table syrup having an aftertaste. US-A-5 447 743 describes a honey-based food product said to have a taste and texture resembling that of pure honey whilst having a substantially lower calorie content, containing honey; a water soluble low-calorie polysaccharide; and a polyalcohol.

Therefore, it is an object of the present invention to provide a base for honey substitutes having flavor release and flow properties matching the natural counterparts. The invention also extends to preparing low-calorie formulated honey and fluid foods with unique viscosity, consistency and nutritional benefits.

### SUMMARY OF THE INVENTION

In accordance with this objective, we have discovered a multifunctional composition suitable for producing fluid foods, especially honey substitutes, comprising at least one high intensity sweetener; at least one water dispersible and/or soluble functional oligosaccharide or polysaccharide.

### DETAILED DESCRIPTION OF THE INVENTION

The advantages of the present invention include providing a multifunctional low calorie food base that may be formulated to replace medium to high viscosity sweetening products including natural honey and syrups. The base compositions have been designed to match the taste and rheological properties of their natural or high calorie counterparts.

The multifunctional low calorie food compositions of the present invention contain at least one high intensity sweetener, at least one viscosifier and at least one water dispersible or soluble bulking agent which is defined below.

### SWEETENERS

Suitable high intensity sweeteners for use in the present invention include sucralose, aspartame, neotame, acesulfame-k, saccharin, cyclamate, steviosides and combinations thereof, and the like. Sucralose is the preferred sweetener.

### VISCOSIFIER SYSTEMS

The food grade viscosifier employed in the multifunctional base will vary depending upon product criteria such as the desired clarity, the consistency, the mouth-feel, the flow properties and other components in the base to make the final fluid compositions. Suitable food grade water-soluble viscosifiers include both water-soluble and water-dispersible hydrocolloids such as natural gums and cellulose derivatives, which may be used in various combinations. The water-soluble gums include pectins, alginates, xanthans, carageenans, guar, locust bean gums, tragacanth and combinations thereof. Water dispersible synthetic gum derivatives suitable for the present invention include carboxymethyl cellulose, hydroxypropyl cellulose, methyl cellulose, hydroxypropyl methylcellulose, hydroxyethyl methylcellulose, methylethylcellulose, hemicellulosic materials, salts thereof and combinations thereof.

Most preferred viscosifiers are those carbohydrates that exhibit solution clarity upon dispersion, impart low to medium or high viscosity, and possess non-elastic consistency and flow properties. This non-elastic rheological property enables the base compositions to match the consistency and flowing properties of the natural counterparts such as honey substitutes and syrups. Such non-elastic flowing gums include carboxymethyl celluloses, pectins and xanthan gums. The viscosity can be in the range from about 2,000 to about 20,000 centipoise (cps) as measured by a Brookfield viscometer with spindle 1 following ASTM # 2196 for non-Newtonian fluids, and preferably from about 2,000 cps to about 10,000 cps (1 cps = 10⁻³ Pa.s⁻¹). For example, light thin honey will generally have a viscosity from about 2,000 cps to about 3,000 cps, while heavy dark honeys will generally have a viscosity of about 10,000 cps to about 20,000 cps. Preferred is a sodium carboxymethyl cellulose viscosifier with a weight average molecular weight of from about 90,000 to about 700,000. Examples of commercially available carboxymethyl cellulose viscosifers with medium to high viscosity grades are AQUALON® carboxymethyl cellulose 7MF, AQUALON® carboxymethyl cellulose 7HF and AQUALON® carboxymethyl cellulose 7H3SF manufactured by Hercules. The viscosifier could be present at a concentration of from 0.1 to about 8 percent by weight of the multifunctional food base and preferably from about 0.2 to about 6 weight percent of the multifunctional base composition. Preferably if the viscosifier is AQUALON® 7H3SF CMC, it will be present at from about 1 to about 1.5 weight percent of the multifunctional base. Preferably if the viscosifier is AQUALON® 7MF CMC, it will be present at from about 2 to about 3 weight percent of the multifunctional base. The water content of the multifunctional base will of course vary depending on the viscosity desired, the amount of viscosifier added and the other solids employed (i.e. bulking agent) but will generally range from about 50 weight percent to about 95 weight percent and preferably will be in the range of from about 60 weight percent to about 90 weight percent.

### BULKING AGENTS

In view of the fact that a large volume of sugar will be replaced by a very small amount of the high intensity sweetener(s), a bulk filler composition is advantageously included in the base compositions. The bulking agent is neutral or low in taste, low in calories, non-digestible, and has no or minimal laxative effect. Examples of suitable bulking agents are carbohydrate-based ingredients such as polydextrose, polyols, inulins, galactomannans, and modified maltodextrin such as FIBERSOL^{™} produced by Matsutani Chemical of Japan and ADM of USA. The amount of filler composition employed is an amount sufficient to match and improve the consistency and flow properties of sugar removed. Depending on the amount of viscosifiers present, the specific quantity for a bulking agent can vary. The typical ranges may be from 0 to 90 weight percent, preferably from 20 to 70 weight percent of the total multifunctional base.

### ADDITIVES

The multifunctional base may have a variety of additives incorporated into the multifunctional base depending on the desired use. For example, food grade preservatives, colorants, flavorings, nutrients and the like may be added to the multifunctional base. Suitable food grade colorants include caramel and artificial food colors. Suitable food grade preservatives include but are not limited to potassium sorbate, citric acid, sodium benzoate, sodium propionate, methyl paraben, propyl paraben and calcium propionate. Suitable food grade flavorings include honey, honey flavoring, rose water and orange blossom water (such as are manufactured by Cortas Canning & Refrigerating Co. S.A.L. Beirut, Lebanon), natural and artificial rose flavorings, and natural and artificial sugar flavorings. The amounts of these additives that are incorporated will depend on the end use of the multifunctional base, however generally the additives will be present at from about 0.1 to about 5 weight percent of the multifunctional base.

### FORMULATIONS

The amounts of each component in the multifunctional base compositions are dependent on the specific components that are used and their intended product purpose. In a honey substitute, the sweetener that is employed will be added in an amount sufficient to approximate the sweetness of honey for a similar amount of bulk - a spoon-for-spoon replacement. The amount of viscosifier system is determined by the desired viscosity, clarity and consistency of a target product. More critically, the quantity and combination of viscosifiers and bulking agents must be provided in an amount sufficient to provide a product having rheological properties similar to natural honey. The amount of the fillers needed will be determined by the stability and level of the viscosifier system and will be sufficient to maintain a uniform flow and consistency over time.

For example, according to the invention, the base composition for honey substitutes comprises:
1. A sweetening system that comprises high intensity sweeteners, wherein the amount of high intensity sweeteners range from about 0.005 to about 3 percent by weight, preferably from 0.1 to 2 percent by weight.
2. A viscosifier system that provides the viscosity, consistency and flow properties to the honey substitutes. The amount of viscosifier ranges from about 0.1 to about 8 weight percent, preferably from 0.5 to 2 weight percent. For product clarity, a carboxymethyl cellulose viscosifier system such as AQUALON® 7MF carboxymethyl cellulose (sold by Hercules) is preferred for a honey with medium viscosity, ranging from 2000 to 5000 centipoise. Meanwhile, for product clarity, acid stability and high viscosity, a carboxymethyl cellulose viscosifier system such as AQUALON® 7H3SF carboxymethyl cellulose (sold by Hercules) at about 0.5 to about 3 weight percent is deirable. However, for a honey substitute with cloudy appearance, viscosifier system may comprise a mixture of carboymethylcellulose, pectins, and xanthan gums ranging from about 0.2 to about 5 weight percent, preferably from 0.5 to 3 weight percent. Table 1 contains a detailed examination of viscosifiers and carbohydrate combinations.
3. A bulking agent defined above that preferably consists of carbohydrates such as functional oligosaccharides and polysaccharides. Preferred oligosaccharides and polysaccharides include fructo-oligosaccharides, inulins, branched inulins, galactomannans, and modified maltodextrin (such as FIBERSOL^{™} maltodextrin). It is also desirable to use carbohydrates in view of their functionality and compatibility with the viscosifier system used to produce value-added honey substitutes for various targeted purposes such as delivering dietary fiber, lowering cholesterol levels, and reducing insulin response. In additional to imparting bulk, inulin and galactomannans will be good source of soluble fiber and useful in lowering cholesterol.
4. In order to perfect the flavor of the honey substitutes according to the invention, the use of a natural honey is found to be very beneficial in matching the aroma of the natural counterparts. Honey comes in a variety of grades based on color such as water white (< 8), extra white (9-17), white (18-34), extra light amber (35-50), light amber (51-85), amber (86-114) and dark amber (>114) as classified on the Pfund color scale (in mm using USDA method). Honey can also be sub-classified based on its floral source (such as sage, white clover, sweet clover, fruits (e.g. orange blossom), vegetable, wild flower, alfalfa, buckwheat and avocado). Preferred natural honey includes white to dark amber honey, especially the Dutch Dark Amber or Dutch Gold honey. The amount of natural honey, especially the dark amber honey with strong honey aroma, ranges from 0.1 to 20 weight percent, preferably from 0.5 to 5 weight percent, with the understanding that increasing amounts of natural honey reduce the required quantity of viscosifiers as well as bulking agents.

According to the present invention and composition, the honey substitute may having a solids content (determined by adding viscosifiers + bulking agent carbohydrates + preservatives and flavorings) of between about 2 to about 45 weight percent, preferably between about 5 to 30 weight percent of the multifunctional base. Preferably the caloric density of the multifunctional base will be less than 1 calorie/cc on a weight basis.

**Table 1 - Viscosifiers Systems**

| Combination | Weight % | Flow property | Consistency | Viscosity, cps | Clarity |
|---|---|---|---|---|---|
| CMC 7HF* | 1.0 | Smooth | Continuous | 2800 | Clear |
| CMC 7H3SF* | 2.5 | Smooth | Continuous | 3000 | Clear |
| Carrageenan*** | 2.0 | Semi-smooth | Continuous | 2900 | Opaque |
| CMC 7H3SF* | 2.5 | Smooth | Continuous | 5700 | Clear |
| Maltodextrin** | 30 | | | | |
| CMC 7H3SF* | 1.1 | Smooth | Continuous | 1300 | Clear |
| Inulin | 18 | | and thin | | |
| CMC 7H3SF* | 1.1 | Smooth | Continuous | 8000 | Clear |
| Maltodextrin** | 40 | | | | |

| | | | | | |
|---|---|---|---|---|---|
| * CMC grades listed are AQUALON® CMC grades. ** The maltodextrin was FIBERSOL^{™} maltodextrin. *** Carrageenan was VISCARIN^{™} sodium carrageenan. | | | | | |

The present invention extends to methods of making low calorie specialty syrups such as rose syrup for the Middle-East region. In such a method, a composition is made by admixing selected viscosifier such as AQUALON ® CMC 7HOF, sweeteners and acidulants for providing a smooth acidity to the product (e.g. acetic acid, adipic acid, citric acid, malic acid, lactic acid, tartaric acid, succinic acid, phosphoric acid and combinations thereof). Other ingredients such as preservatives and flavors will usually be incorporated, as dictated by the nature of the desired composition. The resulting specialty syrup will have a caloric density of less than 0.5 calorie/cc. Preferably these syrups will have a total solids content of from about 2 to about 10 weight percent (based on the total weight of the multifunctional food base).

Meanwhile, the following minerals and nutrients can be added to the formulations of this invention to match the amount of minerals and vitamins contained in their natural counterparts. Vitamins may include but are not limited thiamin, riboflavin, niacin, pantothenic acid, pyridoxine, ascorbic acid and combinations thereof. Minerals may include but are not limited to calcium, copper, iron, magnesium, manganese, phosphorus, potassium, sodium, zinc and combinations thereof. Tables 2 and 3 provide guidelines for the addition of vitamins and minerals, respectively.

**Table 2. Guideline for vitamin additions.**

| Vitamins | Amount in 100 gram of honey, mg* | Preferred ranges of addition, mg per 100 g product | U.S. RDA, mg |
|---|---|---|---|
| Thiamin | < 0.006 | 0.01-0.15 | 1.5 |
| Riboflavin | < 0.06 | 0.1-0.5 | 1.7 |
| Niacin | < 0.36 | 0.5-5 | 20.0 |
| Pantothenic acid | < 0.11 | 0.5-2.5 | 10.0 |
| Pyridoxine | < 0.32 | 0.2-0.5 | 2.0 |
| Ascorbic acid | 2.2-2.4 | 5-20 | 60.0 |

| | | | |
|---|---|---|---|
| * Vitamin composition of honey according to National Honey Board publication. | | | |

**Table 3. Guideline for mineral additions.**

| Minerals | Amount in 100 gram of honey, mg* | Preferred ranges of addition, mg per 100 g product | U.S. RDA, mg |
|---|---|---|---|
| Calcium | 4.4 - 9.2 | 10.0 - 100.0 | 1000.0 |
| Copper | 0.003 - 0.10 | 0.1 - 0.5 | 2.0 |
| Iron | 0.06 - 1.5 | 0.1 - 5.0 | 18.0 |
| Magnesium | 1.2 - 3.5 | 5 - 50 | 400.0 |
| Manganese | 0.02 - 0.4 | 0.02 - 0.1 | |
| Phosphorus | 1.9 - 6.3 | 5.0 - 100.0 | 1000.0 |
| Potassium | 13.2 - 168 | 10.0 - 50.0 | |
| Sodium | 0.0 - 7.6 | 0.0 | |
| Zinc | 0.03-0.4 | 0.5-2.5 | 15.0 |

| | | | |
|---|---|---|---|
| * Mineral composition of natural honey according to National Honey Board. | | | |

The following examples are provided to further illustrate the present invention.

All weight percentages provided in the specification are based on the total weight of the composition with the total of all the weight percentages totaling 100 percent.

### EXAMPLE 1

### Preparation of Honey Substitute

| Ingredient | Weight Percent |
|---|---|
| Deionized water | 58.0 |
| FIBERSOL^{™}, maltodextrin | 37.0 |
| Natural Dutch honey, dark amber | 3.0 |
| Carboxymethylcellulose, AQUALON® 3S7HF | 1.5 |
| Citric acid | 0.18 |
| Sucralose | 0.16 |
| Sugar flavoring | 0.06 |
| Honey flavoring | 0.06 |
| Caramel color | 0.05 |
| Potassium sorbate | 0.03 |
| Sodium benzoate | 0.03 |

This formula describes how to produce good-tasting, high-quality, reduced calorie honey substitute with aroma, consistency and flow properties that match those of natural honey.

First, the preservatives, sucralose and citric acid were added to water under constant agitation. The mixture was heated to about 65.5°C (150°F). The mixture was maintained at this temperature with stirring. While continuing to maintain the temperature, the FIBERSOL^{™} maltodextrin and gum blend were slow added to the mixture while using a medium to high shear mixer to disperse the FIBERSOL^{™} maltodextrin and gum. Flavorings, by Givaudan Roure, such as natural honey flavor 430806 or 44308, natural and artificial sugar type 41265, natural and artificial sugar flavor 415132, and artificial honey flavor can then be added to the mixture. The mixing was continued for 20 minutes to allow to the gum to hydrate. The composition was then sterilized (high temperature short time (HTST) or ultra high temperature (UHT) process) and filled into containers. The containers were cooled to approximately 23.9°C (75°F).

### EXAMPLE 2 (not according to the invention)

### Preparation of Rose Syrup

| Ingredient | Weight Percent |
|---|---|
| Water | 97.8 |
| Rose water | 2.0 |
| Carboxymethylcellulose, AQUALON® 7HF | 1.1 |
| Sucralose | 0.3 |
| Phosphoric acid, 25% | 0.3 |
| Potassium sorbate | 0.05 |
| Sodium benzoate | 0.05 |
| Rose flavor | 0.05 |
| FD&C Red 40 or Carmoisine (10% solution) 0.4 - 0.5 | |

The potassium sorbate, sodium benzoate and sucralose were added to the water under constant agitation. Constant agitation was maintained throughout the blending process. The gum was then slowly added to mixture and allowed to hydrate for 20 to 25 minutes. The mixture was then heat to 85°C (185°F) and held for 1 minute. The phosphoric acid was then added. The containers were filled while the mixture was at a temperature of 82 to 85°C (180 to 185°F) and the containers were inverted for 1 minute to pasteurize the cap. The containers were then cooled under cold tap water to a temperature of approximately 23.9 to 26.7°C (75 - 80°F) for the residual surface water to evaporate. The finished product not only looks like rose syrup but also tastes like rose syrup. The product can then be diluted for use as a beverage.

## Claims

1. A multifunctional food base comprising:
a) from 0.002 to 2 weight percent of a high intensity sweetener;
b) from 0.1 to 8 weight percent of a viscosifier;
c) from 35 to 95 weight percent of water;
d) from 2 to 40 weight percent of a bulking agent which is neutral or low in taste, low in calories, non-digestible and has no or minimal laxative effect; and
e) from 0.1 to 20 weight percent of a flavoring
wherein the multifunctional food base has a viscosity of from 2 to 20 Pa.s⁻¹ (2,000 to 20,000 cps).

2. The food base of claim wherein the high intensity sweetener consists of aspartame, cyclamate, acesulfame-K, saccharin, sucralose, alitame, neotame or a combination thereof.

3. The food base of claim 1 or claim 2 wherein the viscosifier is a pectin, carboxymethyl cellulose, a cellulose gum, xanthan gum, a galactomannan gum, hydroxypropyl cellulose, methyl cellulose, hydroxypropyl methylcellulose, hydroxyethyl methylcellulose, methylethylcellulose, a hemicellulosic material, a salt thereof or a combination thereof.

4. The food base of any one of claims 1 to 3 wherein the bulking agent is a fructo-oligosaccharide, an inulin, a branched inulin, a galactomannan, maltodextrin, modified maltodextrin or a combination thereof.

5. The food base of any one of claims 1 to 4 wherein the flavoring is natural honey, a honey flavor, rose water, a rose flavor, orange blossom water, an orange flavoring, a sugar flavor or a combination thereof.

6. The food base of claim 5 wherein the flavorings are rose water, rose flavoring, orange blossom water and orange flavoring.

7. The food base of claim 5 wherein the flavoring is honey and honey flavoring.

8. The food base of claim 7 wherein the honey is dark amber, gold amber or light amber honey.

9. The food base of claim 8 wherein the floral source of the honey is clover, fruit or vegetable.

10. The food base of any one of claims 1 to 9 wherein the caloric density is less than 1 calorie/cc.

11. The food base of any one of claims 1 to 10 wherein additionally present are a colorant, a preservative, a mineral, a nutrient or a combination thereof as an additive.

12. The food base of any one of claims 1 to 11 wherein the viscosity is in the range of from 2 to 10 Pa.s⁻¹ (2,000 cps to 10,000 cps).

13. A low calorie honey substitute comprising:
a) from 0.1 to 2 weight percent of a high intensity sweetener;
b) from 0.2 to 6 weight percent of a viscosifier;
c) from 40 to 95 weight percent of water;
d) from 2 to 40 weight percent of a bulking agent which is neutral or low in taste, low in calories, non-digestible and has no or minimal laxative effect; and
e) from 0.1 to 20 weight percent of a honey.

14. The honey substitute of claim 13 wherein the viscosity of the low calorie honey substitute is from 2 to 20 Pa.s⁻¹ (2,000 to 20,000 cps).

15. A low calorie rose syrup comprising:
a) from 0.1 to 2 weight percent of a high intensity sweetener;
b) from 0.2 to 6 weight percent of a viscosifier;
c) from 40 to 95 weight percent of water;
d) from 2 to 40 weight percent of a bulking agent which is neutral or low in taste, low in calories, non-digestible and has no or minimal laxative effect; and
e) from 0.1 to 5 weight percent of rose water and rose flavorings
wherein the viscosity of the low calorie rose syrup is from 2 to 20 Pa.s⁻¹ (2,000 to 20,000 cps).

16. The rose syrup of claim 15 wherein the calorie density is less than 0.5 calories/cc.

17. The rose syrup of claim 15 or claim 16 wherein the rose syrup has a total solids content of from 2 to 10 percent.

18. The rose syrup of any one of claims 15 to 17 wherein the rose syrup additionally contains citric acid, adipic acid, fumaric acid, malic acid, tartaric acid, lactic acid or a combination thereof as an acidulant.

19. The honey substitute of claim 13 or claim 14 or the rose syrup of any one of claims 15 to 18 wherein the high intensity sweetener is sucralose.

20. The honey substitute of claim 19 wherein:
a) the weight percent of sucralose is from 0.1 to 2 weight percent;
b) the viscosifier is carboxylmethyl cellulose;
c) the weight percent water is from 60 to 90 weight percent;
d) the bulking agent is a fructo-oligosaccharide, an inulin, a branched inulin, a galactomannan, a maltodextrin, a modified maltodextrin or a combination thereof;
e) the weight percent honey is from 0.5 to 5 weight percent.

## Patentansprüche

1. Multifunktionelles Ausgangsmaterial für Nahrungsmittel, umfassend:
a) von 0,002 bis 2 Gewichtsprozent eines Süßstoffes von hoher Intensität;
b) von 0,1 bis 8 Gewichtsprozent eines Viskositätserhöhers;
c) von 35 bis 95 Gewichtsprozent Wasser;
d) von 2 bis 40 Gewichtsprozent eines Füllstoffes, welcher geschmacksneutral oder schwach an Geschmack, kalorienarm, unverdaulich ist und keinen oder einen minimalen laxativen Effekt besitzt; und
e) von 0,1 bis 20 Gewichtsprozent eines Aromas,
wobei das multifunktionelle Ausgangsmaterial für Nahrungsmittel eine Viskosität von 2 bis 20 Pa.s⁻¹ (2000 bis 20000 cps) aufweist.

2. Ausgangsmaterial für Nahrungsmittel nach Anspruch 1, wobei der Süßstoff hoher Intensität aus Aspartam, Cyclamat, Acesulfam-K, Saccharin, Sucralose, Alitam, Neotam oder einer Kombination davon besteht.

3. Ausgangsmaterial für Nahrungsmittel nach Anspruch 1 oder Anspruch 2, wobei der Viskositätserhöher ein Pektin, Carboxymethylzellulose, ein Zellulosegummi, Xanthangummi, ein Galaktomannangummi, Hydroxypropylzellulose, Methylzellulose, Hydroxypropylmethylzellulose, Hydroxyethylmethylzellulose, Methylethylzellulose, ein hemizellulosisches Material, ein Salz davon oder eine Kombination davon ist.

4. Ausgangsmaterial für Nahrungsmittel nach einem der Ansprüche 1 bis 3, wobei der Füllstoff ein Fructooligosaccharid, ein Inulin, ein verzweigtes Inulin, ein Galaktomannan, Maltodextrin, ein modifiziertes Maltodextrin oder eine Kombination davon ist.

5. Ausgangsmaterial für Nahrungsmittel nach einem der Ansprüche 1 bis 4, wobei das Aroma natürlicher Honig, ein Honigaroma, Rosenwasser, ein Rosenaroma, Orangenblütenwasser, ein Orangenaroma, ein Zuckeraroma oder eine Kombination davon ist.

6. Ausgangsmaterial für Nahrungsmittel nach Anspruch 5, wobei die Aromen Rosenwasser, Rosenaroma, Orangenblütenwasser und Orangenaroma sind.

7. Ausgangsmaterial für Nahrungsmittel nach Anspruch 5, wobei das Aroma Honig und Honigaroma ist.

8. Ausgangsmaterial für Nahrungsmittel nach Anspruch 7, wobei der Honig dunkler bernsteinfarbener, goldener bernsteinfarbener oder leicht bernsteinfarbener Honig ist.

9. Ausgangsmaterial für Nahrungsmittel nach Anspruch 8, wobei die Blumenquelle des Honigs Klee, Obst oder Gemüse ist.

10. Ausgangsmaterial für Nahrungsmittel nach einem der Ansprüche 1 bis 9, wobei die Kaloriendichte weniger als 1 Kalorie/cc beträgt.

11. Ausgangsmaterial für Nahrungsmittel nach einem der Ansprüche 1 bis 10, wobei zusätzlich ein Färbemittel, ein Konservierungsstoff, ein Mineral, ein Nährstoff oder eine Kombination davon als ein Zusatzmittel vorhanden ist.

12. Ausgangsmaterial für Nahrungsmittel nach einem der Ansprüche 1 bis 11, wobei die Viskosität im Bereich von 2 bis 10 Pa.s⁻¹ (2000 cps bis 10000 cps) liegt.

13. Kalorienarmer Honigersatz, umfassend:
a) von 0,1 bis 2 Gewichtsprozent eines Süßstoffs hoher Intensität;
b) von 0,2 bis 6 Gewichtsprozent eines Viskositätserhöhers;
c) von 40 bis 95 Gewichtsprozent Wasser;
d) von 2 bis 40 Gewichtsprozent eines Füllstoffs, welcher geschmacksneutral oder schwach an Geschmack, kalorienarm, unverdaulich ist und keinen oder einen minimalen laxativen Effekt besitzt; und
e) von 0,1 bis 20 Gewichtsprozent eines Honigs.

14. Honigersatz nach Anspruch 13, wobei die Viskosität des kalorienarmen Honigersatzes von 2 bis 20 Pa.s⁻¹ (2000 bis 20000 cps) beträgt.

15. Kalorienarmer Rosensirup, umfassend:
a) von 0,1 bis 2 Gewichtsprozent eines Süßstoffs hoher Intensität;
b) von 0,2 bis 6 Gewichtsprozent eines Viskositätserhöhers;
c) von 40 bis 95 Gewichtsprozent Wasser;
d) von 2 bis 40 Gewichtsprozent eines Füllstoffs, welcher geschmacksneutral oder schwach an Geschmack, kalorienarm, unverdaulich ist und keinen oder einen minimalen laxativen Effekt besitzt; und
e) von 0,1 bis 5 Gewichtsprozent Rosenwasser und Rosenaromen,
wobei die Viskosität des kalorienarmen Rosensirups von 2 bis 20 Pa.s⁻¹ (2000 bis 20000 cps) beträgt.

16. Rosensirup nach Anspruch 15, wobei die Kaloriendichte weniger als 0,5 Kalorien/cc beträgt.

17. Rosensirup nach Anspruch 15 oder Anspruch 16, wobei der Rosensirup einen Gesamtfeststoffgehalt von 2 bis 10 Prozent besitzt.

18. Rosensirup nach einem der Ansprüche 15 bis 17, wobei der Rosensirup zusätzlich Zitronensäure, Adipinsäure, Fumarsäure, Äpfelsäure, Weinsäure, Milchsäure oder eine Kombination davon als Säuerungsmittel enthält.

19. Honigersatz nach Anspruch 13 oder Anspruch 14 oder der Rosensirup nach einem der Ansprüche 15 bis 18, wobei der Süßstoff hoher Intensität Sucralose ist.

20. Honigersatz nach Anspruch 19, wobei:
a) der gewichtsprozentuale Anteil von Sucralose von 0,1 bis 2 Gewichtsprozent beträgt;
b) der Viskositätserhöher Carboxymethylzellulose ist;
c) der gewichtsprozentuale Anteil von Wasser von 60 bis 90 Gewichtsprozent beträgt;
d) der Füllstoff ein Fructooligosaccharid, ein Inulin, ein verzweigtes Inulin, ein Galaktomannan, ein Maltodextrin, ein modifiziertes Maltodextrin oder eine Kombination davon ist;
e) der gewichtsprozentuale Anteil von Honig von 0,5 bis 5 Gewichtsprozent beträgt.

## Revendications

1. Base alimentaire multifonctionnelle comprenant:
a) de 0,002 à 2 % en poids d'un édulcorant de haute intensité ;
b) de 0,1 à 8 % en poids d'un viscosifiant ;
c) de 35 à 95 % en poids d'eau ;
d) de 2 à 40 % en poids d'un diluant qui a un goût neutre ou léger, est pauvre en calories, non-digestible, et n'a pas ou peu d'effet laxatif ; et
e) de 0,1 à 20 % en poids d'un aromatisant
dans laquelle la base alimentaire multifonctionnelle a une viscosité de 2 à 20 Pa.s⁻¹ (2 000 à 20 000 cps).

2. Base alimentaire selon la revendication 1, dans laquelle l'édulcorant de haute intensité est constitué par l'aspartame, le cyclamate, l'acésulfame-K, la saccharine, le sucralose, l'alitame, le néotame ou une combinaison de ceux-ci.

3. Base alimentaire selon la revendication 1 ou 2, dans laquelle le viscosifiant est une pectine, de la carboxyméthylcellulose, une gomme cellulosique, de la gomme xanthane, une gomme de galacto-mannane, de la cellulose hydroxypropylique, de la méthylcellulose, de la méthylcellulose hydroxypropylique, de la méthylcellulose hydroxyéthylique, de la méthyléthylcellulose, une substance hémicellulosique, un sel de celles-ci ou une combinaison de celles-ci.

4. Base alimentaire selon l'une quelconque des revendications 1 à 3, dans laquelle le diluant est un fructo-oligosaccharide, une inuline, une inuline ramifiée, un galacto-mannane, une maltodextrine, une maltodextrine modifiée ou une combinaison de ceux-ci.

5. Base alimentaire selon l'une quelconque des revendications 1 à 4, dans laquelle l'aromatisant est du miel naturel, un arôme de miel, de l'eau de rose, un arôme de rose, une eau de fleur d'oranger, un arôme d'orange, un arôme de sucre ou une combinaison de ceux-ci.

6. Base alimentaire selon la revendication 5, dans laquelle les aromatisants sont l'eau de rose, un arôme de rose, l'eau de fleur d'oranger et l'arôme d'orange.

7. Base alimentaire selon la revendication 5, dans laquelle l'aromatisant est le miel et l'arôme de miel.

8. Base alimentaire selon la revendication 7, dans laquelle le miel est du miel de couleur ambre foncé, ambre doré ou ambre clair.

9. Base alimentaire selon la revendication 8, dans laquelle la source florale de miel est le trèfle, fruit ou légume.

10. Base alimentaire selon l'une quelconque des revendications 1 à 9, dans laquelle la densité calorique est inférieure à 1 calorie/cc.

11. Base alimentaire selon l'une quelconque des revendications 1 à 10, dans laquelle sont en outre présents un colorant, un conservateur, un minéral, un nutriment ou une combinaison de ceux-ci en tant qu'additif.

12. Base alimentaire selon l'une quelconque des revendications 1 à 11, dans laquelle la viscosité se situe dans une plage allant de 2 à 10 Pa.s⁻¹ (2 000 cps à 10 000 cps).

13. Substitut de miel pauvre en calories comprenant :
a) de 0,1 à 2 % en poids d'un édulcorant de haute intensité ;
b) de 0,2 à 6 % en poids d'un viscosifiant ;
c) de 40 à 95 % en poids d'eau ;
d) de 2 à 40 % en poids d'un diluant qui a un goût neutre ou léger, est pauvre en calories, non-digestible, et n'a pas ou peu d'effet laxatif ; et
e) de 0,1 à 20 % en poids d'un miel.

14. Substitut de miel selon la revendication 13, dans lequel la viscosité du substitut de miel pauvre en calories se situe dans une plage allant de 2 à 20 Pa.s⁻¹ (soit 2 000 à 20 000 cps).

15. Sirop de rose pauvre en calorie comprenant :
a) de 0,1 à 2 % en poids d'un édulcorant de haute intensité ;
b) de 0,2 à 6 % en poids d'un viscosifiant ;
c) de 40 à 95 % en poids d'eau ;
d) de 2 à 40 % en poids d'un diluant qui a un goût neutre ou léger, est pauvre en calories, non-digestible, et n'a pas ou peu d'effet laxatif ; et
e) de 0,1 à 5 % en poids d'eau de rose et d'arômes de rose
dans lequel la viscosité du sirop de rose pauvre en calorie se situe dans une plage allant de 2 à 20 Pa.s⁻¹ (2 000 à 20 000 cps).

16. Sirop de rose selon la revendication 15, dans lequel la densité calorique est inférieure à 0,5 calorie/cc.

17. Sirop de rose selon la revendication 15 ou 16, dans lequel le sirop de rose a une teneur totale en matières solides de 2 à 10 %.

18. Sirop de rose selon l'une quelconque des revendications 15 à 17, dans lequel le sirop de rose contient en outre de l'acide citrique, de l'acide adipique, de l'acide fumarique, de l'acide malique, de l'acide tartrique, de l'acide lactique ou une combinaison de ceux-ci en tant qu'acidulant.

19. Substitut de miel selon la revendication 13 ou 14 ou sirop de rose selon l'une quelconque des revendications 15 à 18, dans lequel l'édulcorant de haute intensité est du sucralose.

20. Substitut de miel selon la revendication 19, dans lequel :
a) le pourcentage en poids de sucralose est de 0,1 à 2 % en poids ;
b) le viscosifiant est de la carboxyméthylcellulose ;
c) le pourcentage en poids d'eau est de 60 à 90 % en poids ;
d) le diluant est un fructo-oligosaccharide, une inuline, une inuline ramifiée, un galacto-mannane, une maltodextrine, une maltodextrine modifiée ou une combinaison de ceux-ci ;
e) le pourcentage en poids de miel est de 0,5 à 5 % en poids.
